# EUROPEAN PATENT APPLICATION

(11) **EP 2 395 578 A1**
(43) Date of publication of application: **14.12.2011**
(21) Application number: 11169782.7
(22) Date of filing: 14.06.2011
(51) Int. Cl.: H01M 4/02, H01M 10/0525, H01M 4/505, H01M 4/525, C01G 45/00, C01G 51/00, C01G 53/00

(54) **Positive active material for rechargeable lithium battery, rechargeable lithium battering using the same and method for manufacturing the same**

(30) Priority: 13.06.2010 KR 20100055741; 18.03.2011 KR 20110024565
(71) Applicant: Samsung SDI Co., Ltd., Yongin-si, Gyeonggi-do (KR)
(72) Inventor: Park, Do-Hyung, Yongin-si Gyeonggi-do (KR); Kwon, Seon-Young, Yongin-si Gyeonggi-do (KR); Kim, Ji-Hyun, Yongin-si Gyeonggi-do (KR); Kim, Min-Han, Yongin-si Gyeonggi-do (KR); Kim, Kyoung-Hyun, Yongin-si Gyeonggi-do (KR)
(74) Representative: Salou, Clarisse

(57) **Abstract**

Disclosed are a positive active material for a rechargeable lithium battery and a rechargeable lithium battery using the same. The positive active material is represented by the following Chemical Formula 1, and has an effective magnetic moment of about 2.4µ_{B}/mol or greater, at a temperature of more than or equal to a Curie temperature of said positive active material.

Chemical Formula 1: LiMeO₂.

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or a combination thereof.

The positive active material may have an a-axis lattice constant of the positive active material of about 0.2865 nm or greater, and may have a c-axis lattice constant of the positive active material of about 1.42069 nm or greater.

The mole ratio of Li to Me in Chemical Formula 1 may range from about 0.9 to about 1.2.

## Description

### BACKGROUND OF THE INVENTION

### Field of the Invention

This disclosure relates to a positive active material for a rechargeable lithium battery, a rechargeable lithium battery including the same, and a method of manufacturing the same.

### Description of the Related Art

In recent times, due to reductions in size and weight of portable electronic equipment, there has been a need to develop batteries for use in portable electronic equipment, where the batteries have both high performance and a large capacity.

Batteries generate electric power using electrochemical reaction materials (referred to hereinafter simply as an "active material") for a positive electrode and a negative electrode. Lithium rechargeable batteries generate electrical energy from changes of chemical potential during the intercalation/deintercalation of lithium ions at the positive and negative electrodes.

Lithium rechargeable batteries use materials that reversibly intercalate or deintercalate lithium ions for both positive and negative active materials, and contain an organic electrolyte or a polymer electrolyte between the positive electrode and the negative electrode.

For the positive active material for a rechargeable lithium battery, composite metal oxides such as LiCoO₂ LiMn₂O₄, LiNiO₂, LiNi₁₋ₓCoₓO₂ (0<x<1), LiMnO₂, and so on have been researched.

Manganese-based positive active materials such as LiMn₂O₄ and LiMnO₂ are easy to synthesize, cost less than other materials, have excellent thermal stability compared to other active materials, and are environmentally friendly. However, these manganese-based materials have relatively low capacity.

LiCoO₂ has good electrical conductivity, a high cell voltage of about 3.7V, and excellent cycle-life, stability, and discharge capacity, and thus is a presently-commercialized representative material. However, LiCoO₂ is so expensive that it accounts for more than 30% of the cost of a battery, and thus may lose price competitiveness.

In addition, LiNiO₂ has the highest discharge capacity among the above positive active materials, but is hard to synthesize. Furthermore, since nickel is highly oxidized, it may deteriorate the cycle-life of a battery and an electrode, and may have a problem of severe self discharge and reversibility deterioration. Further, it may be difficult to commercialize due to incomplete stability.

### SUMMARY OF THE INVENTION

An exemplary embodiment provides a positive active material for a rechargeable lithium battery that is economical, and has good stability, high capacity, improved electrical conductivity, and high rate characteristics, and a method of manufacturing the positive active material.

According to one aspect of this disclosure, a positive active material for a rechargeable lithium battery is provided that is represented by the following Chemical Formula 1, and has an effective magnetic moment of about 2.4µ_{B}/mol or greater, at about a temperature of greater than or equal to the Curie temperature of said positive active material.

Chemical Formula 1: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or a combination thereof.

The positive active material may have an a-axis lattice constant of the positive active material of about 0.2865 nm or greater, and may have a c-axis lattice constant of the positive active material of about 1.42069 nm or greater.

The mole ratio of Li to Me (in said positive active material) of Chemical Formula 1 may range from about 0.9 to about 1.2.

In Chemical Formula 1, x, y, z, and k may also be such as 0.55≤x≤0.65, 0.15≤y≤0.25, 0.15≤z≤0.25, 0≤k≤0.1, and x+y+z+k=1.

y and z may be the same, that is to say y and z may have the same value.

In Chemical Formula 1, the mole ratio of Li to Me may also range preferably from about 0.97 to about 1.05.

In Chemical Formula 1, the mole ratio of Li to Me may also range even more preferably from about 0.98 to 1.02.

When the Li sites of the positive active material are filled to 100%, , the ratio of Li atoms existing in the Li sites ranges from about 98 to about 100%.

The positive active material may be prepared by firing a composite transition element precursor and a lithium compound at a temperature of about 800°C, or more, and less than about 900°C.

According to another aspect of this disclosure, a rechargeable lithium battery is provided that includes a positive electrode, a negative electrode, and an electrolyte, wherein the positive electrode includes a current collector and a positive active material layer disposed on the current collector, and the positive active material layer includes a positive active material according to the invention. Preferably, the positive active material has an effective magnetic moment of about 2.0µ_{B}/mol or greater, at a temperature of more than about or equal to the Curie temperature, generally after discharge of the rechargeable lithium battery.

Chemical Formula 1: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or combinations thereof.

The positive active material may have an a-axis lattice constant of the positive active material of about 0.2865 nm or greater, and may have a c-axis lattice constant of the positive active material of about 1.42069 nm or greater.

The mole ratio of Li to Me of Chemical Formula 1 may range from about 0.9 to about 1.2.

In Chemical Formula 1, x, y, z, and k may also be such as 0.55≤x≤0.65, 0.15≤y≤0.25, 0.15≤z≤0.25, 0≤k≤0.1, and x+y+z+k=1.

y and z may be the same.

In Chemical Formula 1, the mole ratio of Li to Me of the above Chemical Formula 1 may also range preferably from about 0.97 to about 1.05.

In Chemical Formula 1, the mole ratio of Li to Me may also range even more preferably from about 0.98 to 1.02.

When the Li sites of the positive active material are filled to 100%, , the ratio of Li atoms existing in the Li sites ranges from about 98 to about 100%.

The positive active material may be prepared by firing a composite transition element precursor and a lithium compound at a temperature of about 800 °C, or more, and less than about 900°C.

The electrolyte may include a non-aqueous organic solvent and a lithium salt.

According to yet another aspect of this disclosure, a method for preparing a positive active material according to the invention, for a rechargeable lithium battery, is included that includes a) preparing a reactor; b) placing a mixture of a composite transition element precursor and a lithium compound into the reactor; and c) firing the mixture put into the reactor, wherein the firing temperature ranges between about 800 °C, or more, and less than about 900°C. From above, it is inherent that the positive active material is represented by the following Chemical Formula 1, and that the positive active material has an effective magnetic moment of about 2.4µ_{B}/mol or greater, at a temperature of about more than or equal to the Curie temperature of said positive active material.

Chemical Formula 1: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or combinations thereof.

The positive active material may have an a-axis lattice constant of the positive active material of about 0.2865 nm or greater, and may have a c-axis lattice constant of the positive active material of about 1.42069 nm or greater.

The mole ratio of Li to Me of Chemical Formula 1 may range from about 0.9 to about 1.2.

The composite transition element precursor may be prepared by reacting a Ni source material, a Co source material, and a Mn source material. In the case of the Ni source material, when the total amount of source materials including a Ni source material and impurities is assumed to be 100 wt%, an amount of Fe impurity in the Ni source material is no more than about 0.002 wt%, and an amount of Co impurity in the Ni source material is no more than about 0.001 wt%. In the case of the Co source material, when the total amount of source materials including a Co source material and impurities is assumed to be 100 wt%, an amount of Fe impurity in the Co source material is no more than about 0.0005 wt%, an amount of Cu in the Co source material is no more than about 0.0003 wt%, an amount of Si in the Co source material is no more than about 0.0025 wt%, and an amount of Na in the Co source material is no more than about 0.0015 wt%. In the case of the Mn source material, when the total amount of source materials including a Mn source material and impurities is assumed to be 100 wt%, an amount of Fe in the Mn source material is no more than about 0.0005 wt%, an amount of Ca in the Mn source material is no more than about 0.01 wt%, an amount of Na in the Mn source material is no more than about 0.01 wt%, and an amount of K in the Mn source material is no more than about 0.01 wt%.

In Chemical Formula 1, a mole ratio of Li to Me of the above Chemical Formula 1 may also range preferably from about 0.97 to about 1.05.

In Chemical Formula 1, the mole ratio of Li to Me may also range even more preferably from about 0.98 to 1.02.

In b) step, the mixture may be used in an amount of about 40 volume% to about 70 volume% of the total volume of the reactor.

The positive active material according to the invention is economical, stable, and has high capacity, and preferably improved electrical conductivity and high-rate characteristics.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a graph showing magnetic susceptibility of the compounds of Examples 1 and 1-1, and Comparative Example 1 versus temperature.

FIG. 2 is a graph approximating an inverse number of the magnetic susceptibility to a linear function versus temperature.

FIG. 3 is a schematic view of a representative structure of a rechargeable lithium battery in accordance with an embodiment of this disclosure.

FIG. 4 is a flow chart showing the preparation of a positive active material according to one embodiment of the invention.

### DETAILED DESCRIPTION OF THE INVENTION

Exemplary embodiments of this disclosure will hereinafter be described in detail. However, these embodiments are only exemplary, and this disclosure is not limited thereto.

According to one embodiment, a positive active material for a rechargeable lithium battery is represented by the following Chemical Formula 1, and the positive active material has an effective magnetic moment of about 2.4µ_{B}/mol or greater, at a temperature of about more than or equal to the Curie temperature of said positive active material.

Chemical Formula 1: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or combinations thereof.

In this specification, the effective magnetic moment is an intrinsic magnetic characteristic of a material measured using a Josephson junction (See, e.g., Phys. Lett., 251 (1962)). Every material has a unique magnetic characteristic, and the magnetic characteristic varies according to a magnetic field or temperature applied from the outside and the variation may be measured by the above-mentioned method.

Conditions for using the above-mentioned method in the present specification are as follows.

The measurement temperature ranges from about 5 to about 380K, the applied magnetic field is 100 Oe (Oersted), and the cooling method is a zero field cooling (ZFC) method, which is a cooling method in the absence of a magnetic field, and/or a field cooling (FC) method in the presence of a magnetic field.

According to one embodiment, measurement equipment may be a magnetic property measurement system (MPMS).

The positive active material may have an effective magnetic moment of about 2.4µ_{B}/mol or greater, at a temperature of about more than or equal to the Curie temperature of said positive active material. In another embodiment, the positive active material may have an effective magnetic moment of about 2.43µ_{B}/mol or greater, and specifically about 5.0µ_{B}/mol or less at a temperature of about more than or equal to the Curie temperature of said positive active material. Satisfying the effective magnetic moment of the range signifies that each element of the positive active material belongs to each site.

The Curie temperature signifies a temperature at which a material loses a magnetic characteristic. In other words, the Curie temperature is a temperature at which the thermal energy of an atom becomes the same as the binding energy of a magnetic moment. Therefore, the magnetic moment is not generally combined at a temperature of more than or equal to the Curie temperature and thus the material comes to have a paramagnetism characteristic.

The effective magnetic moment may be about 2.4µ_{B}/mol or greater, when the positive active material is in a paramagnetic state. The reason that the positive active material may be of the paramagnetic state is shown in the description of the Curie temperature. In short, the effective magnetic moment may have a predetermined value at a temperature of more than or equal to the Curie temperature.

When a rechargeable lithium battery is manufactured using a positive active material having the effective magnetic moment of the above range, the manufactured rechargeable lithium battery has advantageously excellent charge and discharge characteristics. When the effective magnetic moment is measured for Ni²⁺Co³⁺Mn⁴⁺, that is, in the positive active material represented by Chemical Formula 1 with k being 0, it is difficult to have a greater effective magnetic moment than about 2.472µB/mol. The positive active material represented by Chemical Formula 1 with k being 0, may have an effective magnetic moment ranging from about 2.4µ_{B}/mol to about 2.472µ_{B}/mol.

In order to prepare a positive active material having an effective magnetic moment of the above range, the reaction conditions when the positive active material is prepared from a precursor usually need to be controlled. The reaction conditions generally include firing temperature, cooling speed, and the purity of a source material according to composition. A positive active material having the effective magnetic moment may be prepared by properly controlling the conditions, and , a rechargeable lithium battery comprising said positive active material may be manufactured, which has excellent battery characteristics.

The positive active material may have an α-axis lattice constant of about 0.2865 nm or greater, and a c-axis lattice constant of about 1.42069 nm or greater. When the lattice constant satisfies this range, ions are usually advantageously easily transferred. The α-axis lattice constant may be less than about 0.29 nm, and the c-axis lattice constant may be less than about 1.425 nm.

The mole ratio of Li to Me (Li/Me) of the above Chemical Formula 1 may range from about 0.9 to about 1.2. When the mole ratio falls in the above range, the capacity of the battery is advantageously improved. According to one embodiment, the mole ratio of Li to Me (Li/Me) may range from about 0.97 to about 1.05, preferably from about 0.98 to about 1.02.

When the Li sites of the positive active material are filled to 100%, , the ratio of Li atoms existing in the Li sites may range from about 98 to about 100%. At most, about 2% of Li may be replaced by Me.

According to one embodiment, the ratio of Li atoms existing in the Li sites may range from about 99 to about 100%.

In Chemical Formula 1, x may be in the range of 0.55≤x≤0.65, y may be in the range of 0.15≤y≤0.25, and z may be in the range of 0.15≤z≤0.25, where 0≤k≤0.1 and x+y+z+k=1. Also, k may be 0, and the mole ratio of Ni, Co, and Mn may be Ni:Co:Mn=6:2:2. This is a range that goes out of the range of a conventional general ternary positive active material, and it is thereby possible, advantageously according to the invention, to improve battery characteristics, such as battery capacity, voltage retention ratio, cycle characteristic, and so on.

According to one embodiment, y and z may be the same. In other words, the mole ratios of Co of Mn may be the same. In this case, it is possible, advantageously according to the invention, to provide a positive active material that may improve the battery capacity, cycle-life, stability, and so on.

The k may be in the range of 0≤k≤0.1. In other words, the positive active material may be doped with Al, Mg, Ti, or Zr, or combinations thereof. The rechargeable lithium battery may acquire advantageously a high efficiency characteristic and an increased initial capacity by properly controlling the doping.

The positive active material may be prepared by firing a composite transition element precursor and a lithium compound at a temperature ranging about 800°C, or more, and less than about 900°C. According to one embodiment, the temperature may range from about 850°C to 890°C. The temperature range is lower than a usual firing temperature range. When the firing is performed within this range, the battery capacity may be maximized while optimally controlling the particle shape of an active material.

Also, the firing time may be longer than or equal to about 5 hours. According to one embodiment, it may be longer than or equal to about 8 hours.

If the transition element precursor is prepared through a co-precipitation reaction, the reaction conditions may be as follows.

The co-precipitation reaction time may range from about 8 hours to about 10 hours, and the reaction temperature may range from about 30°C to about 50°C. The agitation speed may range from about 500 rpm to about 900 rpm, preferably or from about 600 rpm to about 700 rpm. The reaction conditions allow advantageously the composite transition element precursor to have an appropriate co-precipitation particle diameter and particle shape.

Also, the amount of the mixture of the composite transition element precursor and the lithium compound within the reactor may be about 40 volume% to about 70 volume% of the total volume of the reactor (the total volume of the reactor being 100 volume%). Furthermore, the amount may be less than or equal to about 60 volume% of the total volume of the reactor. To be specific, it may be less than or equal to about 50 volume% of the total volume of the reactor. Within the range, carbon dioxide produced during the firing may be easily and advantageously discharged so as to prepare a positive active material of a uniform shape.

The lithium compound may be lithium carbonate, lithium nitrate, lithium acetate, lithium hydroxide, lithium hydroxide hydrate, or lithium oxide, or combinations thereof. However, this disclosure is not limited thereto.

The composite transition element precursor may be prepared by reacting a Ni source material, a Co source material and a Mn source material. The Ni source material, the Co source material, and the Mn source material may be sulfates, chlorides or nitrates thereof. Alternatively, each of the Ni source material, the Co source material, and the Mn source material may be a solution in which Ni metal, Co metal or Mn metal is dissolved in H₂SO₄.

According to another embodiment of the present invention, a rechargeable lithium battery includes a positive electrode, a negative electrode, and an electrolyte. The positive electrode includes a current collector and a positive active material layer disposed on the current collector. The positive active material layer includes a positive active material according to the invention. Preferably, the positive active material has an effective magnetic moment of about 2.0µ_{B}/mol or greater at a temperature of about more than or equal to the Curie temperature, generally after discharging the rechargeable lithium battery.

Chemical Formula: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or combinations thereof.

The positive electrode includes a current collector and a positive active material layer formed on the current collector. The effective magnetic moment is preferably measured after discharge, at every discharge.

The effective magnetic moment of the positive active material after the discharge of the rechargeable lithium battery may be about 2.0µ_{B}/mol or greater. This is a figure lower than a figure measured for the positive active material itself. This is because when the positive active material is used to manufacture a battery and the battery cell goes through a charge/discharge cycle, a non-reversible phenomenon where some Li does not return from the negative electrode occurs. The effective magnetic moment is preferably about 2.1 µ_{B}/mol or greater, generally after a discharge.

Since the description of the positive active material is the same as the description in the previous embodiment of this disclosure, it may be omitted herein.

According to yet another embodiment of the present invention, a method for preparing a positive active material according to the invention for a rechargeable lithium battery includes a) preparing a reactor; b) placing a mixture of a composite transition element precursor and a lithium compound into the reactor; and c) firing the mixture placed into the reactor, wherein the firing temperature ranges between about 800°C, or more, and less than about 900°C. The positive active material is represented by the following Chemical Formula 1 and the positive active material has an effective magnetic moment of about 2.4µ_{B}/mol or greater, at a temperature of about more than or equal to the Curie temperature of said positive active material.

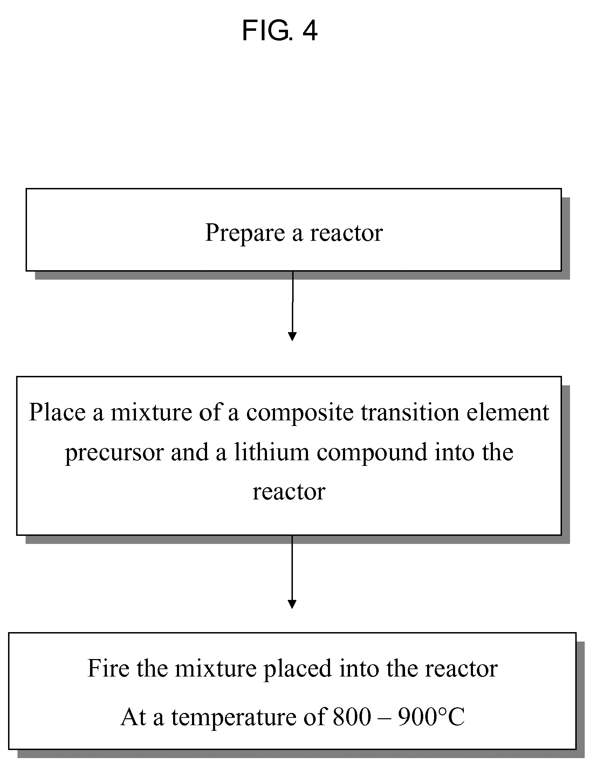

Fig. 4 is a flow chart showing schematically the three steps of said preparation of a positive active material according to the invention.

Chemical Formula 1: LiₐMeO₂

In Chemical Formula 1, Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or combination thereof.

As for the above Chemical Formula 1 and the positive active material, since they are the same as described in the previous embodiment of this disclosure, description thereof will be omitted herein.

The composite transition element precursor is usually prepared by reacting a Ni source material, a Co source material, and a Mn source material. In the case of the Ni source material, when the total amount of source materials that include the Ni source material and impurities is assumed to be 100 wt%, the amount of Fe in the Ni source material is no more than about 0.002 wt% and the amount of Co in the Ni source material is no more than about 0.001 wt%. In the case of the Co source material, when the total amount of source materials that include the Co source material and impurities is assumed to be 100 wt%, the amount of Fe in the Co source material is no more than about 0.0005 wt%, the amount of Cu in the Co source material is no more than about 0.0003 wt%, the amount of Si in the Co source material is no more than about 0.0025 wt%, and the amount of Na in the Co source material is no more than about 0.0015 wt%. In the case of the Mn source material, the total amount of the source materials that include the Mn source material and impurities is assumed to be 100 wt%, the amount of Fe is no more than about 0.0005 wt%, the amount of Ca in the Mn source material is no more than about 0.01 wt%, the amount of Na in the Mn source material is no more than about 0.01 wt%, and the amount of K in the Mn source material is no more than about 0.01 wt%. As shown in the above ranges, the aforementioned effective magnetic moment may be effectively acquired when the amounts of impurities such as Fe, Cu, Si, Ca, Na, and K are controlled.

The composite transition element precursor may be the composite transition element precursor hydroxide.

According to the preparation method, it is possible to fire the composite transition element precursor and the lithium compound at a temperature between about 800°C, or more, and less than about 900°C.According to one embodiment, the firing temperature may range from about 850°C to about 890°C. The temperature range may be lower than a usual firing temperature range. When the firing is performed within this range, the battery capacity may be maximized while optimally controlling the particle shape of the active material. According to one embodiment the firing time may be longer than or equal to about 5 hours, preferably longer than or equal to about 8 hours.

In b) step, the mixture may be placed in an amount of about 40 volume% to about 70 volume% of the reactor of the total volume of the reactor. In one embodiment, the mixture may be an amount of less than or equal to about 60 volume% of the total volume of the reactor. In another embodiment, it may be less than or equal to about 50 volume% of the total volume of the reactor.

The positive active material as defined above having an effective magnetic moment of the above range may be provided. When the mixture is placed in an amount of less than 40 volume% of the total volume of the reactor, it is generally not preferred in terms of manufacturing efficiency.

The positive active material layer usually includes a binder and a conductive material.

The binder of said positive active material layer usually improves binding properties of the positive active material particles to each other and to a current collector. Examples of the binder include at least one (component) selected from the group consisting of polyvinyl alcohol, carboxylmethyl cellulose, hydroxypropyl cellulose, polyvinyl chloride, carboxylated polyvinylchloride, polyvinylfluoride, any polymer including ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is usually included to improve electrode conductivity. Any electrically conductive material may be used as the conductive material unless it causes a chemical change. Examples of the conductive material include natural graphite, artificial graphite, carbon black, acetylene black, ketjen black, carbon fibers, metal powders or metal fibers including copper, nickel, aluminum, silver, a polyphenylene derivative, and mixtures thereof.

The current collector may be Al, but is not limited thereto.

The negative electrode usually includes a current collector and a negative active material layer disposed thereon, and the negative active material layer includes a negative active material.

The negative active material usually includes a material that reversibly intercalates/deintercalates lithium ions, such as a lithium metal, a lithium metal alloy, a material being capable of doping lithium, or a transition metal oxide.

The material that can reversibly intercalate/deintercalate lithium ions usually includes a carbon-based material. The carbon-based material may be any generally-used carbon-based negative active material in a lithium ion rechargeable battery. Examples of the carbon material are crystalline carbon, amorphous carbon, and mixtures thereof. The crystalline carbon may be arbitrarily-shaped, or may be sheet, flake, spherical, or fiber shaped natural graphite or artificial graphite. The amorphous carbon may be a soft carbon, a hard carbon, mesophase pitch carbonized products, fired coke, and so on.

Examples of the lithium metal alloy include lithium and at least one metal selected from the group consisting of Na, K, Rb, Cs, Fr, Be, Mg, Ca, Sr, Si, Sb, Pb, In, Zn, Ba, Ra, Ge, Al, and Sn.

Examples of the material being capable of doping lithium are Si, SiOₓ (0 < x < 2), a Si-Y alloy (where Y is an element selected from the group consisting of an alkali metal, an alkaline-earth metal, a group 13 element (IUPAC version), a group 14 element (IUPAC version), a group 15 element (IUPAC version), a group 16 element (IUPAC version), a transition element, a rare earth element, and combinations thereof, and is not Si), Sn, SnO₂, a Sn-Y alloy (where Y is an element selected from the group consisting of an alkali metal, an alkaline-earth metal, a group 13 element, a group 14 element, a group 15 element, a group 16 element, a transition element, a rare earth element, and combinations thereof, and is not Sn), and mixtures thereof. At least one of these materials may be mixed with SiO₂. Y element may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide include vanadium oxide, lithium vanadium oxide, and the like.

The negative active material layer usually includes a binder and optionally includes a conductive material.

The binder of said negative active material layer usually improves binding properties of the negative active material particles to each other and to a current collector. Examples of the binder include at least one selected from the group consisting of polyvinyl alcohol, carboxylmethyl cellulose, hydroxypropyl cellulose, polyvinyl chloride, carboxylated polyvinylchloride, polyvinylfluoride, polymer including ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as the conductive material unless it causes a chemical change. Examples of the conductive material include natural graphite, artificial graphite, carbon black, acetylene black, ketjen black, a carbon fiber, a metal powder or a metal fiber including copper, nickel, aluminum, silver, and so on, a polyphenylene derivative, or mixtures thereof.

The current collector may be selected from the group consisting of a copper foil, a nickel foil, a stainless steel foil, a titanium foil, a nickel foam, a copper foam, a polymer substrate coated with a conductive metal, or combinations thereof.

The current collector may be Al, but is not limited thereto.

The negative electrode and the positive electrode may be fabricated by a method including mixing the active material, a conductive material, and a binder to provide an active material composition, and coating the composition on a current collector. The electrode manufacturing method is well known, and thus is not described in detail in the present specification. The solvent may be N-methylpyrrolidone, but it is not limited thereto.

The electrolyte usually includes a non-aqueous organic solvent and a lithium salt.

The non-aqueous organic solvent usually acts as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and so on. Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and so on. Examples of the ether-based solvent include dibutyl ether, tetraglyme, diglyme, dimethoxyethane, 2-methyltetrahydrofuran, tetrahydrofuran, and so on. Examples of the ketone-based solvent include cyclohexanone and so on. Examples of the alcohol-based solvent include ethyl alcohol, isopropyl alcohol, and so on, and examples of the aprotic solvent include nitriles such as R-CN (wherein R is a C2 to C20 linear, branched, or cyclic hydrocarbon, a double bond, an aromatic ring, or an ether bond), amides such as dimethylformamide, dioxolanes such as 1,3-dioxolane, sulfolanes, and so on.

The non-aqueous organic solvent may be used alone or in a mixture. When the organic solvent is used in a mixture, the mixture ratio may be controlled in accordance with a desirable battery performance.

The carbonate-based solvent may include a mixture of a cyclic carbonate and a chain carbonate. The cyclic carbonate and the chain carbonate are usually mixed together in a volume ratio of about 1:1 to about 1:9. When said mixture is used as a non-aqueous organic solvent, the electrolyte performance may be enhanced.

In addition, the electrolyte of this disclosure may further include mixtures of carbonate-based solvent(s) and aromatic hydrocarbon-based solvent(s). The carbonate-based solvent(s) and the aromatic hydrocarbon-based solvent(s) are preferably mixed together in a volume ratio of about 1:1 to about 30:1.

The aromatic hydrocarbon-based organic solvent may be represented by the following Chemical Formula 2.

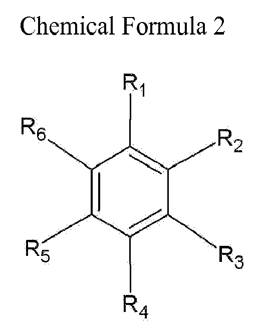

Herein, R₁ to R₆ are independently hydrogen, a halogen, a C1 to C10 alkyl, a C1 to C10 haloalkyl, or combinations thereof.

The aromatic hydrocarbon-based organic solvent may include, but is not limited to, at least one (component) selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

The non-aqueous electrolyte may further include vinylene carbonate or an ethylene carbonate-based compound of the following Chemical Formula 3.

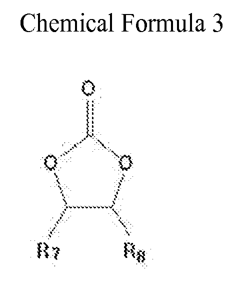

Herein, R₇ and R₈ are independently hydrogen, a halogen, cyano (CN), nitro (NO₂), or a C1 to C5 fluoroalkyl, provided that at least one of R₇ and R₈ is a halogen, a cyano (CN), a nitro (NO₂), or a C1 to C5 fluoroalkyl.

The ethylene carbonate-based compound can include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of said additive usually used for improving cycle life, may be adjusted within an appropriate range.

The lithium salt supplies lithium ions in the battery, and usually operates a basic operation of a rechargeable lithium battery and improves lithium ion transport between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)_{2N}, LiN(SO₃C₂F₅)₂, LiC₄F₉SO₃, LiClO₄, LiAlO₂, LiAlCl₄, LiN(CxF₂ₓ₊₁SO₂)(CyF_{2y+1}SO₂), (where x and y are natural numbers), LiCI, LiI, and LiB(C₂O4)₂ (lithium bisoxalate borate, LiBOB). The lithium salt may be used at a 0.1 to 2.0 M concentration. When the lithium salt is included at the above concentration range, electrolyte performance and lithium ion mobility may be advantageously enhanced due to optimal electrolyte conductivity and viscosity.

The rechargeable lithium battery may further include a separator between a negative electrode and a positive electrode, as needed. Examples of suitable separator materials include polyethylene, polypropylene, polyvinylidene fluoride, and multilayers thereof such as a polyethylene/polypropylene double-layered separator, a polyethylene/polypropylene/polyethylene triple-layered separator, and a polypropylene/polyethylene/polypropylene triple-layered separator.

Rechargeable lithium batteries may be classified as lithium ion batteries, lithium ion polymer batteries, and lithium polymer batteries with respect to the presence of a separator and the kind of electrolyte used in the battery. The rechargeable lithium batteries may have a variety of shapes and sizes, including cylindrical, prismatic, or coin-type batteries. They may be thin film batteries or may be rather bulky in size. Structures and fabricating methods for lithium ion batteries pertaining to this disclosure are well known in the art.

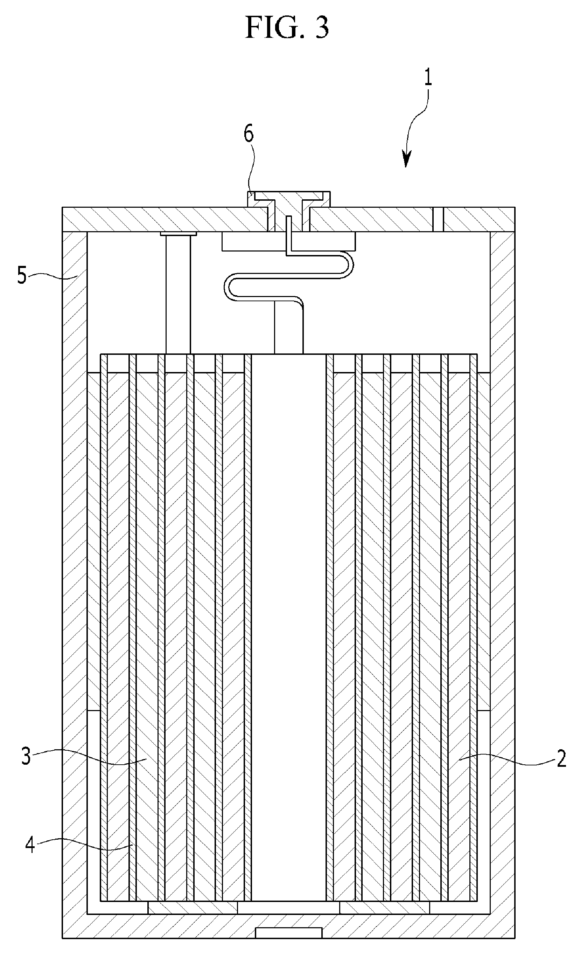

FIG. 3 is a schematic view of a representative structure of a rechargeable lithium battery in accordance with an embodiment of this disclosure. As shown in FIG. 3, the rechargeable lithium battery 1 includes a battery case 5 containing a positive electrode 3, a negative electrode 2, and a separator 4 interposed between the positive electrode 3 and the negative electrode 2, an electrolyte solution (non illustrated) impregnated therein, and a sealing member 6 sealing the battery case 5.

The following examples illustrate this disclosure in more detail. These examples, however, should not in any sense be interpreted as limiting the scope of this disclosure.

### Example

### Example 1: Preparation of positive active material

NiSO₄, CoSO₄ and MnSO₄ were quantitatively mixed in the amounts of 25.1g, 8.7g, and 5.2g, respectively, and continuously reacted in a coprecipitation reactor.

Herein, in the case of NiSO₄, when the amount of source materials including NiSO₄ and impurities was assumed to be 100 wt%, the amount of Fe in NiSO₄ was no more than about 0.002 wt% and the amount of Co in NiSO₄ was no more than about 0.001 wt%. In the case of CoSO₄, when the amount of source materials including CoSO₄ and impurities was assumed to be 100 wt%, the amount of Fe in CoSO₄was no more than about 0.0005 wt%, the amount of Cu in CoSO₄was no more than about 0.0003 wt%, the amount of Si in CoSO₄ was no more than about 0.0025 wt%, and the amount of Na in CoSO₄was no more than about 0.0015 wt%. In the case of MnSO₄, when the amount of source materials including MnSO₄ and impurities was assumed to be 100 wt%, the amount of Fe in MnSO₄ was no more than about 0.0005 wt%, the amount of Ca in MnSO₄was no more than about 0.01 wt%, the amount of Na in CoSO₄was no more than about 0.01 wt%, and the amount of K in MnSO₄ was no more than about 0.01 wt%.

The time taken for the co-precipitation reaction was about 8 hours, the reaction temperature was about 40°C, and the agitation speed was about 600 rpm.

A transition element precursor hydroxide produced as a result of the co-precipitation reaction was collected, rinsed, and dried in an oven set to 120°C. Li₂CO₃ was added to the dried transition element precursor hydroxide until the mole ratio of Li/transition element became 1.03, and said addition mixture was mixed using a simple mixer.

A positive active material was prepared by putting the mixture into a firing container, the volume of the mixture being about 50 volume% when the total volume of the reactor is 100 volume%, increasing temperature at a temperature increase rate of about 2°C/min to fire the mixture at a temperature of about 890°C for about 10 hours, and decreasing the temperature at a temperature descending rate of about 2°C/min to cool the resultant.

### Example 1-1: Preparation of positive active material

NiSO₄, CoSO₄ and MnSO₄ were quantitatively mixed in the amounts of 25.1g, 8.7g, and 5.2g, respectively, and continuously reacted in a coprecipitation reactor.

Herein, in the case of NiSO₄, when the amount of source materials including NiSO₄ and impurities was assumed to be 100 wt%, the amount of Fe in NiSO₄ was no more than about 0.002 wt% and the amount of Co in NiSO₄ was no more than about 0.001 wt%. In the case of CoSO₄, when the amount of source materials including CoSO₄ and impurities was assumed to be 100 wt%, the amount of Fe in CoSO₄ was no more than about 0.0005 wt%, the amount of Cu in CoSO₄ was no more than about 0.0003 wt%, the amount of Si in CoSO₄ was no more than about 0.0025 wt%, and the amount of Na in CoSO₄ was no more than about 0.0015 wt%. In the case of MnSO₄, when the amount of source materials including MnSO₄ and impurities was assumed to be 100 wt%, the amount of Fe in MnSO₄ was no more than about 0.0005 wt%, the amount of Ca in MnSO₄ was no more than about 0.01 wt%, the amount of Na in MnSO₄ was no more than about 0.01 wt%, and the amount of K in MnSO₄ was no more than about 0.01 wt%.

The time taken for the co-precipitation reaction was about 8 hours, the reaction temperature was about 40°C, and the agitation speed was about 600 rpm.

A transition element precursor hydroxide produced as a result of the co-precipitation reaction was collected, rinsed, and dried in an oven set to 120°C. Li₂CO₃ was added to the dried transition element precursor hydroxide until the mole ratio of Li/transition element became 1.03, and said addition mixture was mixed using a simple mixer.

A positive active material was prepared by putting the mixture into a firing container, the volume of the mixture being about 70 volume% when the total volume of the reactor is 100 volume% increasing temperature at a temperature increase rate of about 2°C/min to fire the mixture at a temperature of about 890°C for about 10 hours, and decreasing the temperature at a temperature descending rate of about 2°C/min to cool.

### Comparative Example 1

NiSO₄, CoSO₄, and MnSO₄ were quantitatively mixed in the amounts of 25.1g, 8.7g, and 5.2g, respectively, and continuously reacted in a coprecipitation reactor.

The time taken for the co-precipitation reaction was about 8 hours, and the reaction temperature was about 40°C, and the agitation speed was about 600 rpm.

A transition element precursor hydroxide produced as a result of the co-precipitation reaction was collected, rinsed, and dried in an oven set to 120°C. Li₂CO₃ was added to the dried transition element precursor hydroxide until the mole ratio of Li/transition element became 1.03, and said addition mixture was mixed using a simple mixer.

A positive active material was prepared by putting the mixture into a firing container, the volume of the mixture being about 90 volume%, when the total volume of the reactor is 100 volume%, increasing temperature at a temperature increase rate of about 2°C/min to fire the mixture at a temperature of about 950°C for about 10 hours, and decreasing the temperature at a temperature descending rate of about 2°C/min to cool the resultant.

### Example 2: Manufacturing of a half-cell using the positive active material of Example 1

A positive electrode slurry was prepared by dispersing the positive active material according to Example 1, a polyvinylidene fluoride binder, and a carbon conductive agent in a weight ratio of 96:2:2, in an N-methylpyrrolidone solvent. A positive electrode was manufactured by coating the positive electrode slurry on an aluminum foil in the thickness of about 60 µm, drying it at about 135°C for more than about 3 hours, and compressing the dried product.

A coin-type half-cell was manufactured by using the positive electrode and lithium metal as a counter electrode, interposing a polyethylene separator between the positive electrode and the counter electrode, and implanting an electrolyte solution thereto. As for the electrolyte solution, a mixed solvent of ethylene carbonate (EC), ethylmethylcarbonate (EMC) and dimethylcarbonate (DMC), which was prepared in a volume ratio of 2:2:6 with 1.3M LiPF₆ dissolved therein, was used.

### Example 2-1: Manufacturing of a half-cell using the positive active material of Example 1-1

A coin-type half-cell was manufactured according to the same method as Example 2, except that the positive active material prepared according to Example 1-1 was used instead of the positive active material prepared according to Example 1.

### Comparative Example 2

A coin-type half-cell was manufactured according to the same method as Example 2, except that the positive active material prepared according to Comparative Example 1 was used instead of the positive active material prepared according to Example 1.

### Experimental Example

### XRD analysis result of the positive active material of Example 1

XRD analysis was performed onto the positive active material prepared according to Example 1 under the following conditions.

Analyzer: Bruker D8 Advance

Analysis conditions: 40kV/40mA, about 10 to about 120 degrees, 0.02 degree/step, continuous mode, 10s exposure/step (about 15 hours), Divergency slit/antiscatt. slit/receiving slit = 0.5 deg/0.5 deg/0.20 mm

Program: DBWS (Cerius2, msi), Fullprof

The analysis results are shown in the following Table 1.

**Table 1**

| | Lattice constant (lattice constants, nm) | | Volume (volume, 10⁻³nm³) | Li/transition elements ratio |
|---|---|---|---|---|
| Sample | A | c | V | mole ratio |
| Example 1 | 0.28689 1 | 1.42241 3 | 101.385 3 | 1.005 |

It may be seen that α-axis and c-axis lattice constants of Example 1 fall in the above-mentioned range. Also, it may be seen that the mole ratio of Li to transition element falls in the above-described range.

### Magnetic characteristic analysis (before discharge)

As described above, conditions for measuring magnetic characteristic are as follows.

Measurement temperature ranged from about 5 to about 380K, the applied magnetic field was about 100 Oe, and the cooling method was a zero field cooling (ZFC) method, which is a cooling method in the absence of a magnetic field, and/or a field cooling (FC) method, which is a cooling method in the presence of a magnetic field.

The measurement equipment was a magnetic property measurement system (MPMS).

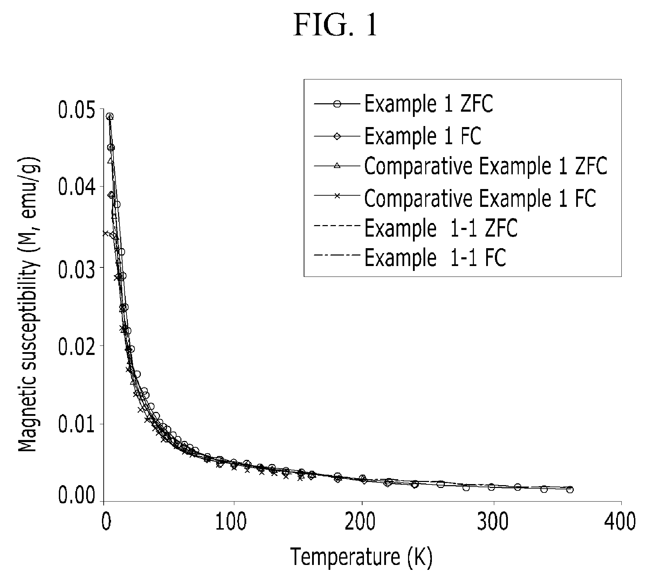

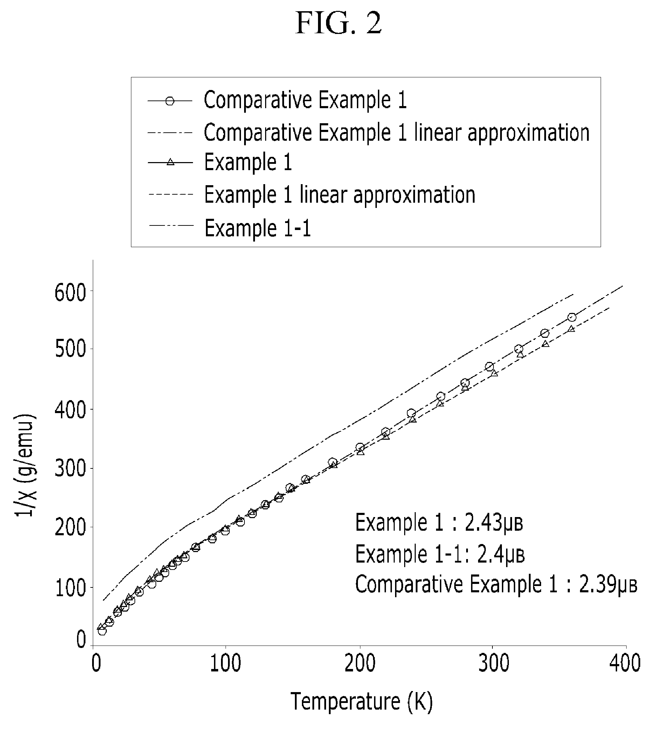

Measurement results are shown in FIGS. 1 and 2.

FIG. 1 is a graph showing magnetic susceptibility of the compounds of Examples 1 and 1-1 and Comparative Example 1 according to temperature. FIG. 2 is a graph approximating an inverse number of the magnetic susceptibility to a linear function according to temperature. The effective magnetic moment is generally obtained from the gradient of the graph shown in Fig. 2.

It may be seen from FIGS. 1 and 2 that the effective magnetic moment of Example 1 was 2.43µB and the effective magnetic moment of Example 1-1 was 2.4 µB. A rechargeable lithium battery using the half-cells of Examples 1 and 1-1 having the value may have excellent charge and discharge characteristics.

### Magnetic characteristic analysis (after discharge)

After the half-cells according to Examples 2 and 2-1 and Comparative Example 2 were discharged, magnetic characteristics of the positive active materials were measured according to the same method as in measurement of magnetic characteristics before discharge. The result is shown in the following Table 2.

**Table 2**

| | Positive active material (after discharge) | Effective magnetic moment (µB/mol) |
|---|---|---|
| Example 2 | Example 1 | 2.03 |
| Example 2-1 | Example 1-1 | 2.01 |
| Comparative Example 2 | Comparative Example 1 | 1.97 |

### Battery cell characteristics

Characteristics of half-cells manufactured according to Examples 2 and 2-1 and Comparative Example 2 were measured, and the measurement results are shown in the following Table 3.

**Table 3**

| | 1^{st} cycle (0.1 C) | | | Discharge capacity at each rate | | | |
|---|---|---|---|---|---|---|---|
| | Charge capacity (mAh/g) | Discharge capacity (mAh/g) | Efficiency (%) | 0.1C (mAh/g) | 0.2C (mAh/g) | 0.5C (mAh/g) | 1C (mAh/g) |
| Example 2 | 194.2 | 176.9 | 91.1 | 176.0 | 168.0 | 158.2 | 151.8 |
| Example 2-1 | 192.5 | 173.1 | 90.0 | 173.2 | 166.3 | 157.0 | 150.2 |
| Comparative Example 2 | 190.1 | 167.3 | 88.0 | 168.3 | 163.3 | 154.8 | 147.2 |

As shown in Table 3, the half-cells of Examples 2 and 2-1 showed improved cycle characteristics and rate discharge capacities compared with that of Comparative Example 2.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting in every way.

## Claims

1. A positive active material for a rechargeable lithium battery comprising a compound represented by the following Chemical Formula 1, wherein
the positive active material has an effective magnetic moment of about 2.4µ_{B}/mol or greater, at about a temperature of more than or equal to the Curie temperature of said positive active material,
Chemical Formula 1: LiₐMeO₂wherein Me is NiₓCo_{y}Mn_{z}M'ₖ, 0.45≤x≤0.65, 0.15≤y≤0.25, 0.15≤z≤0.35, 0.9≤a≤1.2, 0≤k≤0.1, x+y+z+k=1, and M' is Al, Mg, Ti, or Zr, or a combination thereof.

2. The positive active material of claim 1, wherein the positive active material has an a-axis lattice constant of about 0.2865 nm or greater, and has a c-axis lattice constant of about 1.42069 nm or greater.

3. The positive active material of any one of claims 1 and 2, wherein in Chemical Formula 1, 0.55≤x≤0.65, 0.15≤y≤0.25, 0.15≤z≤0.25, 0≤k≤0.1, and x+y+z+k=1.

4. The positive active material of any one of claims 1 to 3,
wherein the mole ratio of Li to Me in Chemical Formula 1 ranges from about 0.9 to about 1.2.

5. The positive active material of any one of claims 1 to 4, wherein y and z have the same value.

6. The positive active material of any one of claims 1 to 5, wherein the mole ratio of Li to Me in Chemical Formula 1 ranges from about 0.97 to about 1.05, preferably from about 0.98 to 1.02.

7. The positive active material of any one of claims 1 to 6, wherein the ratio of Li atoms in the Li sites ranges from about 98% to about 100%.

8. The positive active material of any one of claims 1 to 7, wherein the positive active material was prepared by firing a precursor hydroxide and a lithium compound at a temperature of about 800 °C, or more, and less than about 900°C.

9. A rechargeable lithium battery comprising a positive electrode, a negative electrode, and an electrolyte, wherein the positive electrode comprises a current collector and a positive active material layer disposed on the current collector, and the positive active material layer comprises a positive active material according to any one of claims 1 to 8.

10. The rechargeable lithium battery of claim 9, wherein the electrolyte comprises a non-aqueous organic solvent and a lithium salt.

11. The rechargeable lithium battery of any one of claims 9 and 10, wherein the positive active material has an effective magnetic monument of about 2.0 µ_{B}/mol or greater at about a temperature of more than or equal to the Curie temperature of the positive active material, after discharge.

12. A method for preparing a positive active material according to any one of claims 1 to 8, for a rechargeable lithium battery, comprising:
a) preparing a reactor;
b) placing a mixture of a composite transition element precursor and a lithium compound into the reactor; and
c) firing the mixture placed into the reactor,
wherein the firing temperature ranges between about 800°C, or more, and less than about 900°C.

13. The method of claim 12, wherein the composite transition element precursor is prepared by reacting a Ni source material, a Co source material, and a Mn source material, and
in the case of Ni source material, when a total amount of source materials including a Ni source material and impurities is assumed to be 100 wt%, an amount of Fe impurity in the Ni source material is no more than about 0.002 wt%, and an amount of Co impurity in the Ni source material is no more than about 0.001 wt%;
in the case of the Co source material, when a total amount of source materials including a Co source material and impurities is assumed to be 100 wt%, an amount of Fe in the Co source material is no more than about 0.0005 wt%, an amount of Cu impurity in the Co source material is no more than about 0.0003 wt%, an amount of Si impurity in the Co source material is no more than about 0.0025 wt%, and an amount of Na impurity in the Co source material is no more than about 0.0015 wt%; and
in case of the Mn source material, when a total amount of source materials including a Mn source material and impurities is assumed to be 100 wt%, an amount of Fe impurity in the Mn source material is no more than about 0.0005 wt%, an amount of Ca impurity in the Mn source material is no more than about 0.01 wt%, an amount of Na impurity in the Mn source material is no more than about 0.01 wt%, and an amount of K impurity in the Mn source material is no more than about 0.01 wt%.

14. The method of any one of claims 12 and 13, wherein: In b) step, the mixture is placed in an amount of about 40 volume% to about 70 volume% of the total volume of the reactor.
